# FASCICULE DE BREVET EUROPEEN

(11) **EP 0 635 456 B1**
(45) Date de publication et mention de la délivrance du brevet: **11.09.1996**
(21) Numéro de dépôt: 94401559.3
(22) Date de dépôt: 06.07.1994
(51) Int. Cl.: C01B 21/04, B01D 53/22

(54) **Procédé de fourniture d'azote au moyen de membranes semi-perméables ou de séparateurs de gaz par adsorption**
Verfahren zur Erzeugung von Stickstoff mittels halbdurchlässiger Membrane oder Gasabscheiden durch Adsorption
Process for supplying nitrogen by means of semi-permeable membranes or gasseparator by adsorption

(30) Priorité: 22.07.1993 FR 9309060
(43) Date de publication de la demande: 25.01.1995
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Barbe, Christian, F-92260 Fontenay aux Roses (FR)
(74) Mandataire: Le Moenner, Gabriel

(56) Documents cités:
- EP-A- 0 517 570
- US-A- 5 226 931

## Description

La présente invention concerne la fourniture d'azote de pureté variable à l'aide de moyens tels que la désoxygènation d'air par membrane, ou encore la séparation de l'oxygène de l'air par adsorption préferentielle. L'invention s'applique tout particulièrement aux cas où il est nécessaire d'alimenter des postes utilisateurs dont les besoins en pureté d'azote (et donc en impuretés d'oxygène, de vapeur d'eau..) sont très différents.

La production d'azote par des moyens tels que membranes ou modules d'adsorption préférentielle, dans les deux cas souvent appelés "moyens on-site", s'est considérablement developpée ces dernières années, partout dans le monde, en complément de la production traditionnelle par voie cryogenique, pour les raisons suivantes :
- Ces moyens "on-site" offrent une excellente sécurité d'approvisionnement;
- De faibles couts de production;
- La possibilité de fournir, à des couts très attractifs, selon les applications considérées, des azotes de pureté adaptée, parfois appelés "azotes impurs", dans la mesure où la concentration résiduelle en oxygène dans l'azote peut varier de quelques milliers de ppm (parties par million) à quelques %.

Dans le cas particulier des membranes, on sait que la membrane va réagir différemment selon la température du gaz qu'elle va traiter : On sait en effet qu'à une température élevée (90 °C par exemple), la productivité de la membrane augmente, mais la perméation d'azote augmente aussi, ce qui revient à dire que la sélectivité O₂/N₂ de la membrane se dégrade. Dans ce contexte, on fonctionnera le plus souvent dans les conditions suivantes :
- Pour produire de l'azote de pureté réduite (5% de résiduel d'oxygène par exemple), on utilisera un air comprimé porté à une température relativement élevée (60 °C par exemple).
- Pour produire de l'azote de pureté élevée (1000 ppm de résiduel d'oxygène par exemple), on utilisera un air comprimé porté à une température relativement basse, souvent proche de la température ambiante ou plus basse.

Actuellement on rencontre les différentes situations suivantes :
a) Si le système de production d'azote on-site (qu'il soit de type membranaire ou de type adsorption) n'alimente qu'un poste d'utilisation, de l'air comprimé, provenant d'un compresseur d'air, est tout d'abord traité dans une station dite de conditionnement comprenant des étapes de deshuilage de l'air, séchage, filtrage des particules, et mise en température éventuelle selon les remarques faites précedemment. Dans un second temps, l'air obtenu, ainsi conditionné, est envoyé sur une unité de séparation de gaz (de type membrane ou de type adsorption) adaptée à la production d'un azote nécessité par le poste utilisateur en bout de ligne.
   La situation se complique quand il est nécessaire d'alimenter en azote "impur" (hors cryogenie), simultanément, plusieurs postes utilisateurs nécessitant des puretés d'azote très différentes. Par exemple N₂ à 95 % (5 % impuretés) pour un premier poste, à 99 % (1 % impuretés) pour un second poste utilisateur, et 99.9 % (1000 ppm impuretés) pour un dernier poste. Les configurations pratiquées généralement dans ce cas sont décrites ci-dessous respectivement en b), c) et d) :
b) Cas de "l'unité centrale de séparation" ou "générateur unique". Dans ce cas, parmi toutes les puretés requises, on fera le choix de produire l'azote de pureté la plus élevée pour tous les postes, au risque de faire de la "sur qualité" pour certains des postes. La configuration considérée comprend une unité centrale de séparation (incluant compresseur d'air, station de conditionnement d'air, et unité de séparation d'air), l'azote de pureté choisie issu de cette unité centrale est envoyé via une ligne centrale vers les différentes lignes d'alimentation locales, alimentant les divers postes utilisateurs en bout de chaine.
   On remarque aussitôt le fait que cette solution apparait comme une solution coûteuse, du fait que l'unité de séparation devra effectuer un gros travail de séparation puisqu'elle ramenera de l'air à de l'azote de pureté élevée, pour remplir le cahier des charges de l'application la plus exigente. Il s'en suit donc une solution onéreuse, tant sur un plan énergétique, que sur le plan de la surface requise de membrane quand la technique de séparation utilisée est la séparation membranaire.
c) La seconde solution : le cas "multiples unités sur réseau d'air comprimé". La configuration s'adapte en fait sur un réseau d'air comprimé prééxistant. Elle comprend un compresseur d'air centralisé, duquel ressort de l'air comprimé via une ligne centralisée, cette ligne alimentant tout d'abord une ligne d'alimentation d'un poste utilisateur d'air comprimé, puis en parallèle un faisceau de lignes locales de distribution alimentant plusieurs postes utilisateurs d'azote dont les besoins en pureté d'azote diffèrent. Chaque ligne locale comprend une station de conditionnement d'air et une unité de séparation de gaz (qu'elle soit de type membrane ou adsorption) adaptée aux besoins en pureté du poste utilisateur en bout de ligne.
   On comprend ici encore aisément que cette configuration n'est pas optimisée, dans la mesure ou chaque unité de séparation va traiter de l'air comprimé, d'où des différences de pureté (souvent appelés "gap") en oxygène entre l'air entrant et l'azote sortant qui peuvent être élevés, et en particulier des surfaces de membrane nécessaire importantes quand le choix de la technique membrane a été fait pour un des postes de séparation. L'énergie mise en oeuvre ici est en revanche moyenne, mais cet avantage est généralement obéré par l'obtention d'une pression pour l'azote produit souvent relativement faible (3 à 4 10⁵ Pa) dans cette situation où l'on dispose d'air réseau dont la pression est fixée par les applications habituelles de l'air comprimé (6 à 7 10⁵ Pa suffisent habituellement).
d) La troisième solution parfois évoquée pour résoudre ce problème de multi utilisateurs/multi puretés sous la dénomination "multi unités autonomes" est constituée de la façon suivante : chaque ligne alimentant un poste utilisateur est autonome, elle comporte un compresseur d'air, une station de conditionnement d'air, et une unité de séparation locale d'air adaptée aux besoins d'azote du poste utilisateur qui se trouve au bout de la ligne, l'azote issu de chacune de ces unités de séparation étant ensuite directement envoyé vers le poste utilisateur correspondant.

Ici encore cette configuration présente des inconvénients non négligeables, liés à la multiplication inutile d'un certain nombre de postes; on notera en fait pour cette solution un inconvenient lié à un investissement élevé plus qu'à un coût de fonctionnemment élevé.

Pour chacune des quatre configurations évoquées plus haut (a), b), c) d)), on tiendra en compte d'autre part le fait que l'unité de séparation traitant directement de l'air pour le transformer en azote avec selon les besoins, un "gap" de pureté elevé, le mélange obtenu côté perméat de la membrane est constitué d'air fortement suroxygéné, ce qui n'est pas sans soulever des problèmes de sécurité pour la manipulation de ce perméat.

L'objet de la présente invention est de proposer un procédé de fourniture d'azote à une multiplicité de postes utilisateurs dont les besoins en pureté d'azote sont différents, ce procédé:
- étant plus économique que les solutions existantes (bilan de l'énergie nécessaire, surface de membrane nécessaire si cette technique est utilisée, coût d'investissement);
- permettant de valoriser les membranes traditionnellement de productivité et selectivité différentes existant dans un même lot de fabrication de membranes ou dans des lots différents (écart type de la fabrication);
- permettant de travailler dans des conditions de sécurité plus satisfaisantes au niveau du perméat des membranes, lorsque la technique membrane est choisie pour une des étapes.

Pour ce faire, le procédé objet de l'invention part d'air comprimé obtenu à partir d'un compresseur d'air, cet air comprimé est tout d'abord traité sur au moins une station de conditionnement d'air centralisée, réalisant au moins une des étapes suivantes : déshuilage de l'air, filtrage de l'air de la majeure partie de ses particules, séchage de l'air, et mise en température éventuelle de l'air, la séparation de l'oxygène étant alors effectuée en deux étapes, une première étape centralisée où à partir de l'air issu de la station de conditionnement, on produit de l'azote de pureté intermédiaire (relativement faible), l'ensemble compresseur + station de conditionnement + unité de séparation de gaz pouvant être appelé "unité centrale de séparation", l'azote obtenu, de pureté intermédiaire, en sortie d'unité centrale, étant dirigé vers les lignes locales d'alimentation des différents postes utilisateurs, pour lesquels la pureté requise est différente, chaque ligne locale comportant une unité de séparation de gaz locale adaptée aux besoins en pureté du poste utilisateur en bout de ligne. On effectue ainsi un double étage de séparation.

Par unité de séparation de gaz, qu'elle soit locale ou centralisée, on entend selon l'invention aussi bien une unité de séparation constituée de modules de membranes, qu' une unité de séparation du type adsorption préférentielle de l'oxygène par rapport à l'azote sur des tamis moléculaires ou composés adaptés ou encore des combinaisons de ces moyens de séparation. La technologie de séparation de gaz par adsorption est tout particulièrement attractive pour obtenir des puretés élevées d'azote. Une séparation centrale par la technologie membrane présente par ailleurs l'avantage de produire un azote très sec (caractérisé par un point de rosée descendant au moins à - 60°C), sa distribution ne posant alors pas de problème de condensation ou de gel par suite d'humidité résiduelle. Les problèmes de corrosion de ligne sont également supprimés.

Par l'expression "azote de pureté intermédiaire" obtenu à la sortie de l'unité centrale, on entend une concentration d'oxygène résiduelle se situant dans la gamme [1%, 12%], preférentiellement dans la gamme [3%, 7%].

Les puretés d'azote obtenues en bout de chaine pourront être très largement variable selon les applications, elles se situeront avantageusement dans la gamme [500 ppm, 5%] d'oxygène dans l'azote.

Dans le cas du choix d'une technologie membranaire, selon un aspect de l'invention, dans un souci de simplicité, comme décrit précédemment, il n'y a pas de stations de conditionnement décentralisées au niveau des lignes locales, donc pas de mise en température spécifique par ligne. Selon d'autres aspects de l'invention, on installera au niveau de chaque ligne locale une station de conditionnement de gaz permettant une mise en température spécifique du gaz qui sera traité par la ligne considérée.

Dans un tel cas, on adopte avantageusement selon un aspect de l'invention les conditions suivantes de température :
- pour les modules membranaires situés dans l'unité centrale de séparation, une mise en température de l'air dans la gamme [20°C, 90°C], préférentiellement dans la gamme [40°C, 60°C]
- lorsque des stations de conditionnement de gaz ont été décentralisées au niveau des lignes locales, on prétraitera le gaz (l'azote de pureté intermédiaire) avant son arrivée sur les membranes locales de façon à ce que sa température soit située dans la gamme (-60°C, 90°C], et préférentiellement dans la gamme [ 15°C, 50°C].

Par membrane de séparation de gaz, on entend, selon l'invention, tout type de membrane semi-perméable, présentant de bonnes propriétés de séparation de l'oxygène par rapport à l'azote (sélectivité) comme c'est par exemple le cas pour les membranes type polyimide, ou encore type polysulfone. On pourra d'ailleurs utiliser avantageusement selon un des aspects de l'invention, des types de membrane différents d'un poste à l'autre de séparation, selon la pureté requise.

Comme il sera démontré ci-dessous à l'aide d'exemples comparatifs, le procédé selon l'invention offre une solution économiquement très attractive, bien qu'apparemment plus compliquée. Le procédé selon l'invention permet de contrôler dans les deux zones du procédé (liées aux deux étages de séparation) précisément les performances de séparation, par la caractéristique des matériels mis en oeuvre (types de membranes ou d'unité d'adsorption). Chaque étape de séparation met en oeuvre un "gap" de pureté reduit (air/azote de pureté intermédiaire dans le premier cas, azote de pureté intermédiaire/ azote de pureté améliorée dans le second cas), nécessitant de ce fait une surface membranaire réduite (quand la technique membrane est utilisée). Selon le mode standard de mise en oeuvre de l'invention, seule l'unité de séparation est décentralisée et donc multipliée, d'où globalement un coût d'investissement réduit.

On notera de plus, compte tenu des "gap" de pureté réduits à chaque étage de séparation, comme évoqué plus haut, la mise en oeuvre lors de l'utilisation d'un ou de modules membranaires, de perméats nettement moins sur-oxygénés, présentant de ce fait moins de risques sur le plan de la sécurité.

D'autres caractéristiques et avantages de la présente invention ressortiront de la description suivante de modes de réalisation donnés à titre illustratif mais nullement limitatif, faite en relation avec les dessins annexés, sur lesquels :
- La figure 1 est une vue schématique d'une installation mettant en oeuvre le procédé selon l'invention dans le but d'alimenter simultannément trois postes d'utilisation.
- La figure 2 est une vue schématique de l'unité centrale de séparation représentée sur la figure 1.

Comme représenté sur les figures, de l'air comprimé, issu d'un compresseur d'air 12 traverse une station de conditionnement 13 effectuant le séchage de l'air, son déshuilage, un filtrage de particules et la mise en température de l'air. L'air comprimé issu de cette station de conditionnement est alors dirigé vers une unité de séparation de gaz centralisée de type membrane 14. L'ensemble compresseur 12 + station de conditionnement 13 + unité de séparation centralisée 14 constitue une unité centrale de séparation 1. Cette unité centrale produit un azote de pureté intermédiaire, caractérisé par une concentration résiduelle d'oxygène se situant dans la gamme [1%, 12%]. Cet azote est dirigé par une ligne centralisée 2 vers trois lignes locales 3, 4, 5 d'alimentation en azote de trois postes utilisateurs 9, 10, 11. Chaque ligne locale comprend une unité de séparation locale de gaz, de type membrane 6, 7, 8 desquelles sont issu des azotes de pureté adaptée aux postes utilisateurs 9, 10, 11 se trouvant en bout de ligne.

Compte tenu des performances différentes demandées aux modules de membranes situés en centralisé ou en localisé, il est possible de valoriser pour ces unités de séparation membranaire des membranes issues d'un même lot de fabrication de membranes ou de lots différents, mais présentant des performances variables du fait d'un écart type normal de fabrication.

L'exemple suivant illustre la présente invention.

Il constitue une comparaison d'un procédé mis en oeuvre selon l'invention avec les solutions de l'état de l'art évoquées plus haut en b) ("générateur unique"), c) ("multiples unités sur réseau d'air comprimé"), d) ("multi unités autonomes"), dans le cas d'un site de l'industrie chimique où il est nécessaire d'alimenter trois postes utilisateurs en azote, tolérant des niveaux d'impuretés en oxygène différents :
. Un premier poste nécessitant un débit d'azote de 50Nm3/h contenant un maximum de 1% d'oxygène.
. Un second poste nécessitant un débit d'azote de 10Nm3/h contenant un maximum de 0.1% d'oxygène.
. Un troisième poste nécessitant un débit d'azote de 100Nm3/h contenant un maximum de 2% d'oxygène.

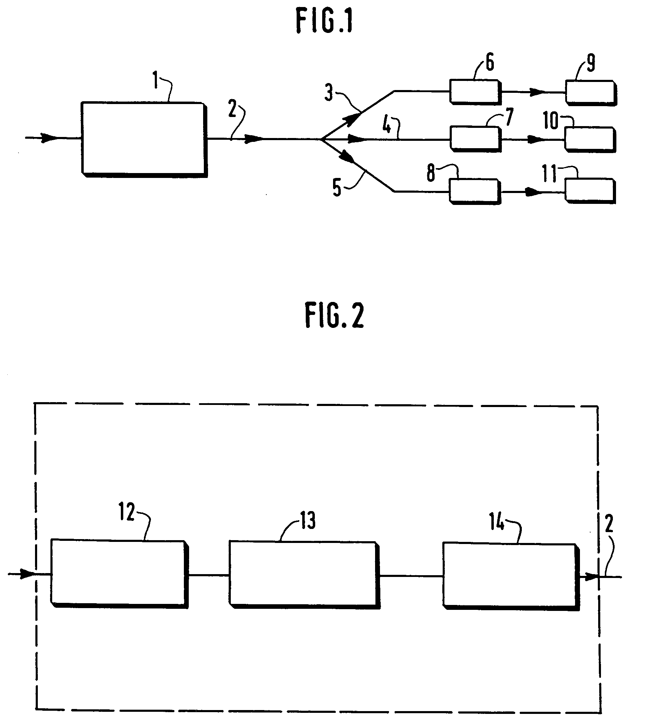

Ce cas a été réalisé selon l'invention, grace à une installation telle que celle décrite sur les figures 1 et 2, l'air comprimé est porté à une température de 50°C avant d'arriver sur l'unité de séparation centralisée 14, l'unité centrale 1 produit un azote de pureté intermédiaire comportant une teneur maximum en oxygène de 5 %. L'unité centrale met en oeuvre des modules de séparation par membrane, à l'aide de membranes de type polyimide. Les trois unités de séparation locale purifient cet azote intermédiaire jusqu'à la teneur souhaitée en bout de chaque ligne. Chaque unité locale met en oeuvre ici aussi des membranes à fibre creuse dont la couche active est un polyimide.

La table 1 compare la surface de membrane installée et la consommation d'energie de la réalisation selon l'invention à celle des réalisation selon les trois autres solutions évoquées ci-dessus. Les données de la réalisation du procédé selon l'invention sont ramenées à 100.

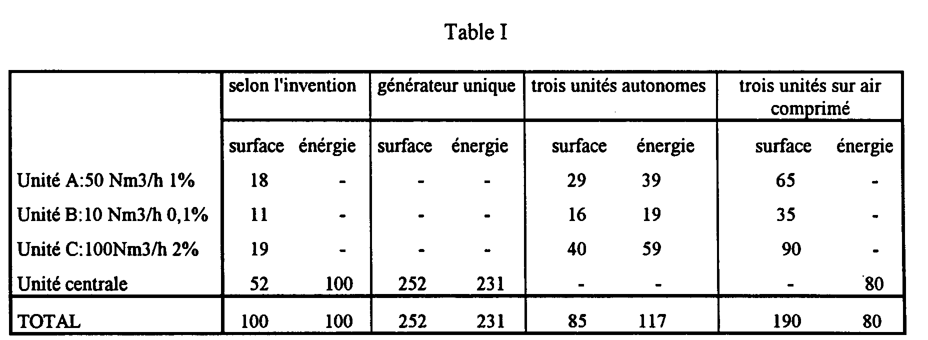

Chaque solution met en oeuvre des unités de séparation par membrane à fibres creuses dont la couche active est un polyimide. Les compresseurs d'air sont de type à vis lubrifiées.

La solution . "générateur unique" : produit la totalité des besoins en azote du site à la pureté la plus élevée demandée soit 0.1% d'oxygène résiduel au maximum. Le compresseur d'air produisant de l'air à 14 10⁵ Pa absolus.

La solution "multiples unités sur réseau d'air comprimé" : Le compresseur d'air produit de l'air à 8.5 10⁵ Pa absolu.

La solution "multi unités autonomes" : Chaque compresseur d'air produisant de l'air à 14 10⁵ Pa absolus.

L'observation des éléments présents dans ce tableau confirme l'intérêt de la réalisation selon l'invention. En comparaison :

La solution "générateur unique" : I'évaluation confirme ce qui avait été précedemment signalé, à savoir le caractère coûteux de cette solution, tant sur une plan énergétique, que sur un plan de la surface de membrane à mettre en oeuvre.

La solution "multiples unités sur réseau d'air comprimé" : on retrouve ici le fait que cette solution est particulièrement peu avantageuse sur le plan de la surface de membrane mise en oeuvre. L'énergie mise en oeuvre reste raisonnable, cet avantage étant toutefois largement tempéré par la faible pression d'utilisation des azotes produits comme signalé plus haut.

La solution "multi unités autonomes" : ici encore, les chiffres confirment le fait que cette solution est relativement consommatrice d'énergie. Si la surface mise en oeuvre est relativement réduite, le coût d'investissement est globalement plus élevé du fait de la multiplication de certains postes tels que chaine de déshuilage ou encore le chauffage de l'air.

## Revendications

1. Procédé de fourniture d'azote à au moins deux postes utilisateurs, dont les besoins en pureté d'azote sont différents, comportant les étapes suivantes :
a) On fait passer de l'air comprimé, provenant d'un compresseur d'air (12), dans au moins une station (13) de conditionnement d'air permettant d'effectuer au moins l'un des traitement suivants :
- deshuilage;
- filtrage de la majeure partie des particules;
- séchage;
- mise en température éventuelle de l'air à la température voulue;
b) L'air comprimé conditionné issu de l'étape a) est envoyé dans une unité centralisée de séparation de gaz (14), de façon à produire en sortie d'unité de l'azote impur de pureté intermédiaire;
c) Le gaz issu de l'unité centralisée de séparation (14) est dirigé vers au moins deux lignes d'utilisation (3 - 5), comportant chacune une unité de séparation locale de gaz (6 - 8), dans laquelle le dit gaz est de nouveau traité, de façon à obtenir en sortie de chaque unité locale de séparation de l'azote de pureté adaptée aux besoins de chacun des postes utilisateurs (9, 10) en bout de ligne.

2. Procédé selon la revendication 1, caractérisé en ce que l'azote produit à l'issue de l'étape b) contient une concentration résiduelle d'oxygène située dans la gamme [1%, 12%], préférentiellement dans la gamme [3%, 7%].

3. Procédé selon l'une des revendications 1 ou 2, caractérisé en ce que l'azote obtenu en sortie de chacune des unités de séparation locale (6 - 8) contient une concentration résiduelle d'oxygène située dans la gamme [500 ppm, 5%].

4. Procédé selon l'une des revendications 1 à 3, caractérisé en ce qu'au moins une des unités de séparation de gaz (14 ; 6 - 8) utilisées à l'étape b) ou c) est du type membranaire, le reste des unités de séparation de gaz étant alors du type adsorption.

5. Procédé selon l'une des revendications 1 à 3, caractérisé en ce que au moins une des unités de séparation de gaz (14 ; 6 - 8) utilisées à l'étape b) ou c) est du type adsorption, le reste des unités de séparation de gaz étant alors du type membranaire.

6. Procédé selon l'une des revendications 4 ou 5, caractérisé en ce que la ou les unités de séparation de gaz de type membranaire mettent respectivement en oeuvre des membranes de caractéristiques variables.

7. Procédé selon l'une des revendications 4 à 6 caractérisé en ce que au moins une des membranes est de type polyimide.

8. Procédé selon l'une des revendications 4 à 7 caractérisé en ce que le gaz traité dans chaque unité de séparation membranaire est le cas échéant préchauffé, au dessus de la température ambiante, ou refroidi.

9. Procédé selon la revendication 8, caractérisé en ce que la température appliquée au gaz, le cas échéant, est différente selon qu'il s'agit de l'unité de séparation centralisée de l'étape b) ou de l'une des unités de séparation locale de l'étape c).

10. Procédé selon la revendication 9, caractérisé en ce que :
- Pour l'unité de séparation centralisée, la température du gaz est maintenue dans la gamme [20°C,90°C], préférentiellement dans la gamme [40°C, 60°C];
- Pour une unité de séparation locale, la température du gaz est maintenue dans la gamme [-60°C, 90°C] et préférentiellement dans la gamme [15°C, 50°C].

## Claims

1. Method for providing nitrogen to at least two work stations whose needs in terms of nitrogen purity are different, which method includes the following steps:
a) compressed air from an air compressor (12) is passed into at least one air conditioning station (13) which carries out at least one of the following treatments:
- removal of oil;
- filtering out of the majority of the particles;
- drying;
- optionally, setting of the temperature of the air to the desired temperature;
b) the conditioned compressed air obtained at the end of step a) is conveyed to a centralized gas separation unit (14), so as to produce impure nitrogen of intermediate purity at the outlet of the unit;
c) the gas obtained from the centralized separation unit (14) is directed to at least two lines of use (3 - 5), each containing a local gas separation unit (6 - 8), in which the said gas is again treated, so as to obtain at the outlet of each local separation unit nitrogen of a purity suited to the needs of each of the work stations (9, 10) at the end of the line.

2. Method according to Claim 1, characterized in that the nitrogen produced by the end of the step b) contains a residual oxygen concentration which is within the range [1 %, 12 %], preferably within the range [3 %, 7 %].

3. Method according to either of Claims 1 and 2, characterized in that the nitrogen obtained at the outlet of each of the local separation units (6 - 8) contains a residual oxygen concentration which is within the range [500 ppm, 5 %].

4. Method according to one of Claims 1 to 3, characterized in that at least one of the gas separation units (14; 6 - 8) used in step b) or c) is of the membrane type, the rest of the gas separation units then being of the adsorption type.

5. Method according to Claims 1 to 3, characterized in that at least one of the gas separation units (14; 6 - 8) used in step b) or c) is of the adsorption type, the rest of the gas separation units then being of the membrane type.

6. Method according to either of Claims 4 and 5, characterized in that the gas separation unit or units of membrane type respectively use membranes of variable characteristics.

7. Method according to one of Claims 4 to 6, characterized in that at least one of the membranes is of polyimide type.

8. Method according to one of Claims 4 to 7, characterized in that the gas treated in each membrane separation unit is, if necessary, preheated, above room temperature, or cooled.

9. Method according to Claim 8, characterized in that the temperature applied to the gas, if necessary, is different depending on whether it concerns the centralized separation unit of step b) or one of the local separation units of step c).

10. Method according to Claim 9, characterized in that:
- for the centralized separation unit, the temperature of the gas is maintained within the range [20°C, 90°C], preferably within the range [40°C, 60°C];
- for a local separation unit, the temperature of the gas is maintained within the range [-60°C, 90°C] and preferably within the range [15°C, 50°C].

## Patentansprüche

1. Verfahren zur Lieferung von Stickstoff an mindestens zwei Nutzerstellen, deren Reinheitsanforderungen an den Stickstoff unterschiedlich sind, mit folgenden Verfahrensschritten:
a) Man laßt Druckluft, von einem Luftkompressor (12) geliefert, durch mindestens eine Luftkonditionierstation (13) hindurchströmen, die die Durchführung mindestens eine der folgenden Behandlungen erlaubt:
- Ölabscheidung;
- Filterung des überwiegenden Teiles an Partikeln;
- Trocknung
- Etwaige Temperaturanpassung der Luft an eine gewünschte Temperatur;
b) Die komprimierte konditionierte Luft nach dem Schritt a) wird in eine zentralisierte Einheit zur Gasseparation (14) geschickt, um am Ausgang der Einheit das unreine Stickstoff mit einem Zwischenreinheitsgrad zu produzieren;
c) Das Gas aus der zentralisierten Einheit zur Separation (14) wird zu mindestens zwei Leitungen zur Nutzung (3-5) geleitet, wobei jede eine Einheit zur lokalen Separation des Gases (6-8) enthält, in der das Gas aufs Neue behandelt wird, um am Ausgang jeder lokalen Einheit zur Separation einen Stickstoff mit einer an die Bedürfnisse einer jeden der Nutzungsstellen (9, 10) am Ende der Leitung angepaßten Einheit zu erzielen.

2. Verfahren nach Anspruch 1, dadurch gekennzeichnet, daß das Stickstoffprodukt am Ende des Verfahrensschrittes b) eine Restkonzentration an Sauerstoff in dem Bereich von 1 % bis 12 %, vorzugsweise in dem Bereich von 3 % bis 7 % enthält.

3. Verfahren nach Anspruch 1 oder 2, dadurch gekennzeichnet, daß der am Ausgang jeder Einheit zur lokalen Separation (6-8) erzielte Stickstoff eine Restkonzentration an Sauerstoff enthält, die sich im Bereich von 500 ppm bis 5 % befindet.

4. Verfahren nach einem der Ansprüche 1 bis 3, dadurch gekennzeichnet, daß mindestens eine der bei den Verfahrenschritten b) oder c) eingesetzten Einheiten zur Gasseparation (14; 6-8) ein Membrantyp ist, die verbleibenden Einheiten zur Gasseparation sind dann Adsorbtionstypen.

5. Verfahren nach einem der Ansprüche 1 bis 3, dadurch gekennzeichnet, daß mindestens eine der im Verfahrensschritt b) oder c) eingesetzten Einheiten zur Gasseparation (14; 6-8) vom Adsorbtionstyp ist, die verbleibenden Einheiten zur Gasseparation sind dann vom Membran-Typ.

6. Verfahren nach einem der Ansprüche 4 oder 5, dadurch gekennzeichnet, daß die membranartige(n) Einheit(en) zur Gasseparation jeweils Membranen mit variablen Charakteristiken benutzt bzw. benutzen.

7. Verfahren nach einem der Ansprüche 4 bis 6, dadurch gekennzeichnet, daß mindestens eine der Membranen vom Polyimidtyp ist.

8. Verfahren nach einem der Ansprüche 4 bis 7, dadurch gekennzeichnet, daß das behandelte Gas in jeder Einheit zur membranartigen Separation gegebenenfalls vorgeheizt wird, über die Umgebungstemperatur, oder abgekühlt wird.

9. Verfahren nach Anspruch 8, dadurch gekennzeichnet, daß die auf das Gas angewandte Temperatur gegebenenfalls unterschiedlich ist, je nachdem, ob es sich um eine Einheit zur zentralisierten Separation des Verfahrensschrittes b) oder um eine der Einheiten zur lokalen Separation des Verfahrensschrittes c) handelt.

10. Verfahren nach Anspruch 9, dadurch gekennzeichnet, daß:
- für die Einheit zur zentralisierten Separation die Temperatur des Gases in einem Bereich von 20° C bis 90° C aufrechterhalten wird, vorzugsweise in einem Bereich von 40° C bis 60° C;
- für eine Einheit zur lokalen Separation die Temperatur des Gases in einem Bereich von -60° C bis 90° C und vorzugsweise in einem Bereich von 15° C bis 50° C aufrechterhalten wird.
